# FASCICULE DE BREVET EUROPEEN

(11) **EP 0 962 346 B1**
(45) Date de publication et mention de la délivrance du brevet: **06.09.2006**
(21) Numéro de dépôt: 99460038.5
(22) Date de dépôt: 04.06.1999
(51) Int. Cl.: B60J 1/12, B60J 1/16

(54) **Dispositif d'obturation d'une baie ménagée dans la carrosserie d'un véhicule, à coulissement extérieur, et procédé de fabrication et de montage correspondant**
Abschlussvorrichtung für eine Öffnung einer Fahrzeugkarosserie, mit Aussengleitung und Herstellungsverfahren und entsprechende Montagevorrichtung
Closing device for an aperture of a vehicle body, with exterior sliding and method for manufacturing and corresponding installation

(30) Priorité: 05.06.1998 FR 9807264
(43) Date de publication de la demande: 08.12.1999
(73) Titulaire: WAGON SAS, 79300 Bressuire (FR)
(72) Inventeur: Martineau, Daniel M., 85700 Saint-Martin (FR)
(74) Mandataire: Vidon, Patrice

(56) Documents cités:
- EP-A- 0 683 064
- DE-A- 3 343 366
- US-A- 4 845 890

## Description

Le domaine de l'invention est celui des baies de véhicule. Plus précisément, l'invention concerne les dispositifs d'obturation d'une baie ménagée dans la carrosserie d'un véhicule, comprenant une glace s'ouvrant vers l'extérieur du véhicule.

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe qui viennent pincer simultanément les bords de la glace et de l'ouverture ménagée dans la carrosserie, avec une garniture d'étanchéité.

Dans d'autres situations, on prévoit une glace déflectrice, montée sur un cadre embouti. La partie de la glace dirigée vers l'avant du véhicule est collée à l'aide d'un mastic suffisamment souple pour pouvoir s'écraser légèrement. La partie de la glace dirigée vers l'arrière du véhicule peut s'écarter de la carrosserie, vers l'extérieur. Cet écartement présente un angle limité, notamment pour des raisons de sécurité. L'ouverture de la glace se fait donc seulement par un entrebaillement, la glace subissant une rotation autour d'un axe correspondant à la partie de la glace dirigée vers l'avant.

Un inconvénient de cette technique est que l'ouverture est très limitée. Il n'est bien sûr pas possible de prévoir un angle d'ouverture important, en particulier du fait de la présence du joint, dont la capacité d'écrasement reste limitée. En conséquence, il n'entre que très peu d'air par cette ouverture, d'autant plus qu'elle est dirigée vers l'arrière du véhicule.

Par ailleurs, la partie de la glace dirigée vers l'arrière du véhicule se trouverait très éloignée de la carrosserie, si l'ouverture était importante, ce qui poserait des problèmes de sécurité.

Un autre inconvénient de cette technique est que le cadre embouti déborde sur la carrosserie, alors qu'il est souhaité, tant pour des raisons esthétiques qu'aérodynamiques, que la surface extérieure du véhicule soit le plus lisse possible.

On connait également du document EP 0 683 064 une autre approche, selon laquelle la vitre est entrebaillée par rotation, mais peut coulisser le long de la carrosserie. Le document US-A-4 845 890, comportant les caractéristiques du préambule de la revendication 1 divulgue encore une autre approche selon laquelle deux vitre sont mobiles, l'une se décalant pour permettre à l'autre de coulisser le long de la carrosserie.

L'invention a notamment pour objectif de pallier ces différents inconvénients de l'état de l'art.

Plus précisément, un objectif de l'invention est de fournir un dispositif d'obturation d'une baie ménagée dans la carrosserie d'un véhicule, qui s'ouvre vers l'extérieur et qui offre une ouverture importante, permettant notamment une entrée d'air suffisante dans le véhicule, tout en présentant un déport réduit.

Un autre objectif de l'invention est de fournir un tel dispositif d'oburation, qui n'interfère pas avec le volume intérieur utile du véhicule, en position ouverte.

L'invention a également pour objectif de fournir un tel dispositif d'oburation, qui soit affleurant sur la carrosserie, de façon à présenter un aspect extérieur pratiquement lisse.

Un autre objectif de l'invention est de fournir un tel dispositif, qui soit simple et rapide à fabriquer et à assembler, et qui soit facile à monter sur la carrosserie d'un véhicule, sans moyen complexe.

Encore un objectif de l'invention est de fournir un tel dispositif, qui soit d'un coût de revient réduit, tant en en ce qui concerne la fabrication que l'assemblage et le montage.

Un objectif complémentaire de l'invention est de fournir un procédé de fabrication (fabrication des pièces constitutives et leur assemblage) et de montage sur la carrosserie du véhicule à la fois simple, rapide et peu coûteuse.

Ces objectifs, ainsi que d'autres qui apparaitront plus clairement par la suite, sont atteints selon l'invention par un dispositif d'obturation selon la revendication 1.

L'invention repose donc sur une approche nouvelle des systèmes d'ouverture de glace vers l'extérieur. La glace ne subit pas un entrebaillement, mais est décalée de façon à rester parallèle à la carrosserie.

Par ailleurs, la glace est montée sur un cadre fixé, par exemple par collage, à la carrosserie. Cette technique permet une installation très simple. Ainsi, ledit cadre est avantageusement fixé à ladite carrosserie à l'aide d'un matériau de fixation et d'étanchéité.

La glace peut donc être affleurante, ce qui permet d'obtenir l'aspect esthétique souhaité.

Les éléments de liaison permettent également un mouvement de ladite glace parallèle au plan de ladite baie, le long dudit plan d'ouverture.

Ainsi, il est possible d'obtenir une entrée d'air importante. L'ouverture peut être modulée selon la position de la glace le long du plan de coulissement.

Notamment, le coulissement peut être possible sur une longueur prédéterminée, permettant de libérer une portion de ladite baie. En d'autres termes, la glace présente une course correspondant à une partie de la baie. Cette course est par exemple définie de façon à obtenir le meilleur compromis entre l'ouverture maximum et l'étanchéité en position fermée.

Préférentiellement, ledit dispositif d'obturation comprend des moyens d'étanchéisation entre ledit cadre et ladite glace, lorsque cette dernière est en position d'obturation.

Selon un mode de réalisation avantageux de l'invention, lesdits moyens d'étanchéisation comprennent un joint d'étanchéité fixé sur ledit cadre.

De façon préférentielle, chacun desdits éléments de liaison coopère avec un rail de guidage solidaire dudit cadre.

Selon un mode de réalisation particulier de l'invention, lesdits moyens de liaison comprennent chacun au moins deux articulations, de façon que ladite glace soit également décalée parallèlement audit plan formé par ladite baie, lorsqu'elle se trouve en position de libération.

Avantageusement, lesdits éléments de liaison comprennent :
- un premier organe d'articulation, dont une première extrémité peut coulisser dans ledit rail et pivoter entre deux positions extrêmes par rapport audit rail ; et
- un second organe d'articulation, dont une première extrémité est montée mobile en rotation sur la seconde extrémité dudit premier organe d'articulation, et dont la seconde extrémité est fixée à ladite glace.

Selon un mode de réalisation préférentiel de l'invention, ledit dispositif d'obturation comprend un élément d'articulation supérieur, coopérant avec un rail de guidage supérieur solidaire de la partie supérieure dudit cadre, et un élément d'articulation inférieur, coopérant avec un rail de guidage inférieur solidaire de la partie inférieure dudit cadre.

Préférentiellement, le dispositif d'obturation de l'invention comprend des moyens de verrouillage de ladite glace en position d'obturation, agissant sur au moins un desdits éléments de liaison.

L'invention concerne également un procédé de fabrication et de montage d'un dispositif d'obturation tel que décrit ci-dessus. Un tel procédé comprend notamment les étapes suivantes :
- fabrication d'un cadre correspondant sensiblement au contour de ladite baie ;
- fabrication d'une glace correspondant sensiblement à la surface de ladite baie ;
- solidarisation de ladite glace audit cadre, à l'aide d'éléments de liaison permettant un mouvement de ladite glace perpendiculaire au plan de ladite baie, entre :

- une position d'obturation de ladite baie, dans laquelle ladite glace prend appui contre ledit cadre, de façon à venir sensiblement dans le plan de ladite carrosserie ; et
- une position de libération, dans laquelle ladite glace est décalée vers l'extérieur du véhicule, sur un plan d'ouverture ;
- solidarisation dudit cadre à ladite carrosserie.

Il apparaît ainsi que tant la fabrication que le montage du dispositif d'obturation de l'invention peuvent être effectués de façon simple et rapide, sans moyen particulier.

D'autres caractéristiques et avantages de l'invention apparaitront à la lecture de la description suivante d'un mode de réalisation préférentiel de l'invention, donné à titre de simple exemple illustratif et non limitatif, et des dessins annexés, parmi lesquels :
- la figure 1 illustre, de façon schématique, un dispositif d'obturation selon l'invention, en position ouverte ;
- les figures 2A et 2B présentent, schématiquement, le dispositif de la figure 1 en coupe, respectivement en position fermée (position d'obturation) et en position ouverte (position de libération) ;
- la figure 3 présente la glace du dispositif de la figure 1, équipée de ses moyens de liaison et de coulissement ;
- la figure 4 illustre le cadre prévu pour recevoir la glace de la figure 3 ;
- la figure 5 est un synoptique simplifié d'un procédé de fabrication et de montage d'un dispositif tel qu'illustré en figure 1.

L'invention concerne donc une nouvelle technique pour l'obturation d'une baie ménagée dans la carrosserie, qui offre un aspect continu avec la carrosserie, et qui permet une ouverture vers l'extérieur du véhicule.

Selon cette technique, la baie est obturée par une unique glace, qui reste en permanence parallèle à la carrosserie. Cette glace peut donc se déplacer perpendiculairement à la carrosserie et (avantageusement mais non obligatoirement) parallèlement à la carrosserie, par coulissement le long de celle-ci, à l'extérieur du véhicule.

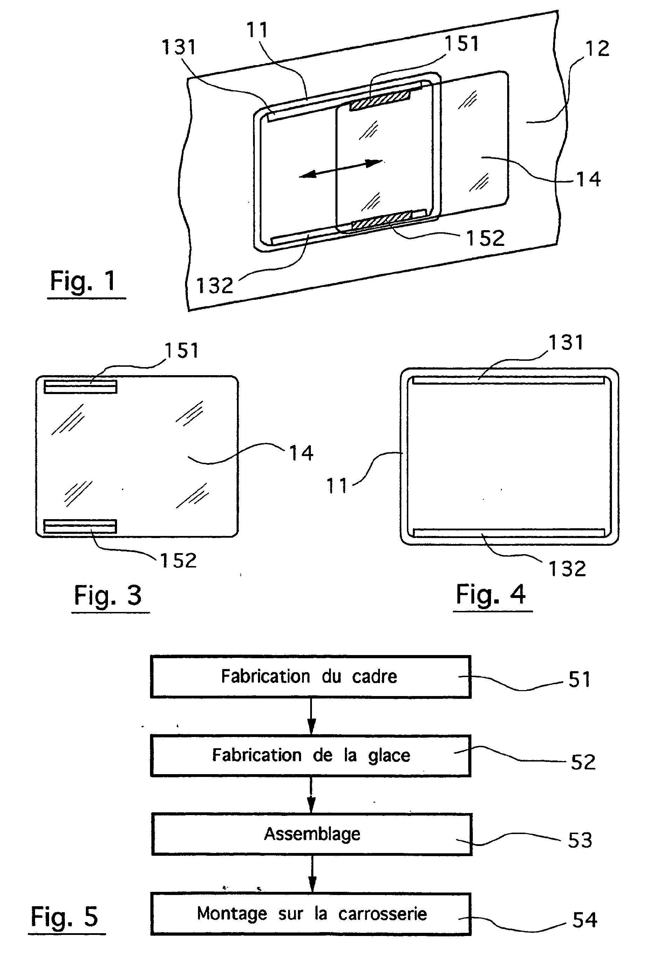

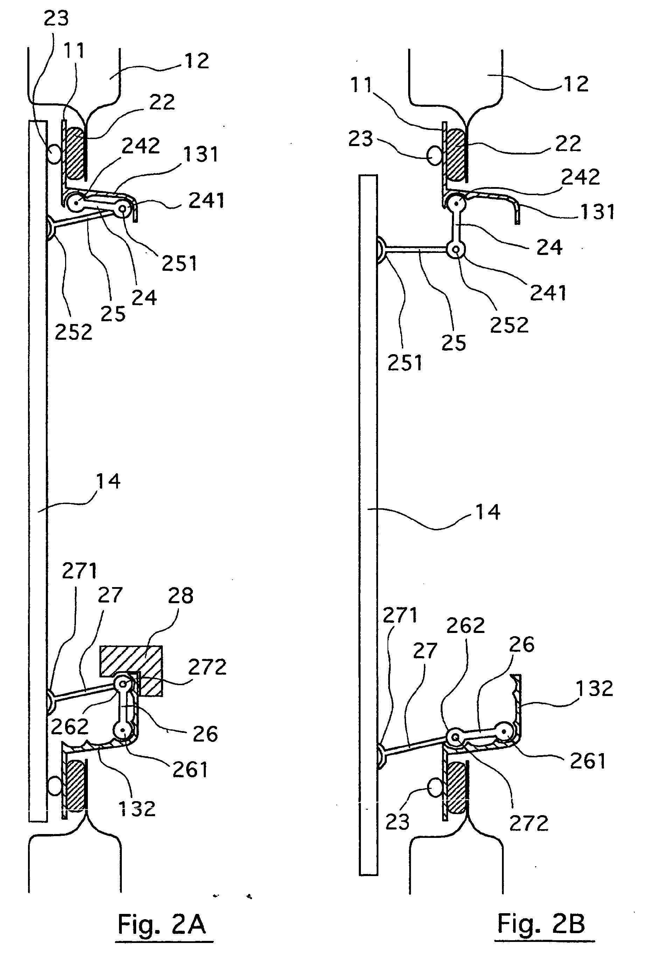

La figure 1 illustre le principe général d'un dispositif d'obturation selon l'invention, en position ouverte (position de libération et glace coulissée de façon à obtenir l'ouverture maximale).

Un cadre 11, par exemple en matière plastique ou en acier embouti, est solidarisé à la carrosserie 12. Il correspond sensiblement au contour de l'ouverture ménagée dans la carrosserie. Il porte deux rails de guidage et de coulissement, un rail supérieur 131 et un rail inférieur 132.

La glace 14 est prévue pour venir fermer l'ouverture. Ses bords peuvent donc venir, en position d'obturation, en regard du cadre 11. Elle est solidarisée à ce cadre par des éléments de liaison 151 et 152, coopérant respectivement avec les rails 131 et 132.

Ces éléments de liaison permettent d'assurer le double mouvement (perpendiculaire et parallèle au plan de la carrosserie), comme cela apparaît plus clairement par la suite.

Bien que dans l'exemple illustré en figure 1, la baie soit plane et rectangulaire, il est clair que l'invention s'applique également à tout autre type d'ouverture. Notamment, la glace 14 peut être bombée et/ou d'une forme quelconque. Par ailleurs, le dispositif de l'invention s'applique notamment aux parois latérales d'un véhicule. Cependant, il peut également être mis en oeuvre sur le pavillon d'un véhicule, et plus généralement en tout emplacement où cela serait souhaitable.

La glace 14 peut être en verre ou en un matériau transparent ou translucide adapté. Elle peut également être réalisée dans le même matériau que la carrosserie. On notera également qu'il est possible d'utiliser plusieurs glaces indépendantes pour obturer une baie (par exemple une glace se déplaçant vers la gauche et l'autre vers la droite). Le cas échéant, l'une des glaces peut être fixe.

On décrit maintenant plus en détail un mode de réalisation de l'invention, illustré par les figures 2A et 2B, qui présentent le dispositif de la figure 1 en coupe.

Le cadre 11 est solidarisé au bord 21 de la carrosserie par un mastic 22, qui assure à la fois le collage et l'étanchéité. Bien sûr, d'autres moyens de fixation, tel que le rivetage, peuvent être prévus.

Ce cadre 11 porte également, sur sa face extérieure, un joint d'étanchéité 23, qui assure l'étanchéité lorsque la glace 14 est fermée (figure 2A). Cet aspect est très avantageux, car il permet de réaliser l'étanchéité lors de la fabrication du dispositif. Lors du montage, il suffit de coller le cadre à la carrosserie, sans se soucier du problème de l'étanchéité au niveau de la glace.

Le cadre 11 est muni d'un rail supérieur 131 et d'un rail inférieur 132, avec lesquels coopèrent les éléments de liaison 151 et 152.

L'élément de liaison supérieur 151 comprend un premier organe 24 et un second organe 25, reliés entre eux. Une extrémité 241 du premier organe 24 est montée en rotation sur le rail de guidage 131. En position d'obturation, cet organe 24 est sensiblement horizontal (figure 2A). Il se retrouve vertical en position de libération (figure 2B).

Le second organe 25 présente une première extrémité 251 fixée, par exemple par collage, à la glace 14. La seconde extrémité 252 est articulée sur la seconde extrémité 242 du premier organe 24. Ce second organe 25 reste sensiblement horizontal dans les deux positions, de façon à repousser la glace vers l'extérieur, en position de libération (figure 2B).

Ainsi, lorsque la glace est ouverte, elle se trouve suspendue à l'élément de liason supérieur 151.

L'élément de liaison inférieur 152 comprend également, de façon similaire, deux organes 26 et 27 articulés entre eux à leurs extrémités respectives 262 et 272. L'autre extrémité 261 de l'organe 26 est montée à rotation sur le rail de coulissement 132. L'autre extrémité 271 de l'organe 27 est solidarisée à la glace 14.

En position d'obturation, l'organe 26 est sensiblement horizontal. Il passe pratiquement à la verticale en position de libération. L'organe 27 reste quant à lui sensiblement dans le même plan légèrement incliné par rapport à l'horizontale.

Le verrouillage de la glace (figure 2A) est assuré par exemple par une came 28 qui prend appui sur la face extérieure du rail 132, et qui maintient l'articulation 262, 272.

La figure 3 illustre la glace de la figure 1, munie de ses éléments de liaison 151 et 152. Ces derniers s'étendent sur une partie (sensiblement une moitié) de la longueur de la glace, ce qui permet une ouverture partielle (voir figure 1) de la baie. Il n'est bien sûr pas possible de dégager complètement cette ouverture... On choisit donc un compromis entre l'ouverture maximum et la longueur des éléments de liaison. Celle-ci doit être suffisante pour garantir le maintien solide de la glace, et une bonne rigidité de l'ensemble, de façon que le coulissement soit aisé et que l'étanchéité soit garantie, en position fermée.

La figure 4 illustre le cadre correspondant, muni des rails 131 et 132, qui peuvent être réalisés directement dans le même matériau que le cadre 14, ou rapportés sur celui-ci. Ces rails s'étendent préférentiellement sur toute la longueur du cadre, de façon à maximiser la longueur de contact avec les éléments de liaison 151 et 152.

La figure 5 illustre de façon simplifiée un procédé defabrication et de montage d'un dispositif tel que décrit précédemment.

Dans un premier temps, on fabrique le dispositif d'obturation. On réalise donc d'une part un cadre correspondant sensiblement au contour de la baie (51), que l'on équipe des rails de guidage.

Par ailleurs, on fabrique une glace (52) correspondant sensiblement à la surface de la baie, sur laquelle on rapporte les éléments de liaison.

Ensuite, on solidarise (53) la glace au cadre, après avoir placé sur le cadre le joint d'étanchéité 23.

Le dispositif ainsi réalisé peut alors être livré à un constructeur, qui n'a plus qu'à le monter (54) sur la carrosserie d'un véhicule, à l'aide d'un mastic adéquat.

## Revendications

1. Dispositif d'obturation d'une baie ménagée dans la carrosserie (12) d'un véhicule, comprenant un cadre (11) destiné à être rapporté sur ladite carrosserie, et une glace mobile (14) par rapport audit cadre (11), liée audit cadre (11) par des éléments de liaison (151, 152, 24, 25, 26, 27) permettant un mouvement de ladite glace (14) perpendiculaire au plan de ladite baie, entre :
- une position d'obturation de ladite baie, dans laquelle ladite glace (14) prend appui contre ledit cadre (11), de façon à venir sensiblement dans le plan de ladite carrosserie ; et
- une position de libération, dans laquelle ladite glace (14) est décalée vers l'extérieur du véhicule, sur un plan d'ouverture,
**caractérisé en ce que** lesdits éléments de liaison (151, 152, 24, 25, 26, 27) permettent également un mouvement de coulissement de ladite glace (14), sur une longueur prédéterminée le long dudit plan d'ouverture, ladite glace (14) restant en permanence parallèle au plan de ladite baie.

2. Dispositif d'obturation selon la revendication 1, **caractérisé en ce qu'**il comprend des moyens d'étanchéisation (23) entre ledit cadre (11) et ladite glace (14), lorsque cette dernière est en position d'obturation.

3. Dispositif d'obturation selon la revendication 2, **caractérisé en ce que** lesdits moyens d'étanchéisation comprennent un joint d'étanchéité (23) fixé sur ledit cadre.

4. Dispositif selon l'une quelconque des revendications 1 à 3, **caractérisé en ce que** ledit cadre (11) est fixé à ladite carrosserie à l'aide d'un matériau (22) de fixation et d'étanchéité.

5. Dispositif d'obturation selon l'une quelconque des revendications 1 à 4, **caractérisé en ce que** chacun desdits éléments de liaison (151, 152) coopère avec un rail (131,132) de guidage solidaire dudit cadre.

6. Dispositif d'obturation selon l'une quelconque des revendications 1 à 5, **caractérisé en ce que** lesdits moyens de liaison (151, 152) comprennent chacun au moins deux articulations (24, 25, 26, 27), de façon que ladite glace soit également décalée parallèlement audit plan formé par ladite baie, lorsqu'elle se trouve en position de libération.

7. Dispositif d'obturation selon l'une quelconque des revendications 5 à 6, **caractérisé en ce que** chacun desdits éléments de liaison comprend :
- un premier organe d'articulation (24, 26), dont une première extrémité peut coulisser dans ledit rail (131, 132) et pivoter entre deux positions extrêmes par rapport audit rail ; et
- un second organe d'articulation (25, 27), dont une première extrémité est montée mobile en rotation sur la seconde extrémité dudit premier organe d'articulation, et dont la seconde extrémité est fixée à ladite glace (14).

8. Dispositif d'obturation selon l'une quelconque des revendications 5 à 7, **caractérisé en ce que** qu'il comprend un élément d'articulation supérieur (151, 24, 25), coopérant avec un rail de guidage supérieur (131) solidaire de la partie supérieure dudit cadre, et un élément d'articulation inférieur (152, 26, 27), coopérant avec un rail de guidage inférieur (132) solidaire de la partie inférieure dudit cadre.

9. Dispositif d'obturation selon l'une quelconque des revendications 1 à 8, **caractérisé en ce qu'**il comprend des moyens de verrouillage (28) de ladite glace en position d'obturation, agissant sur au moins un desdits éléments de liaison (26, 27).

10. Procédé de fabrication et de montage d'un dispositif d'obturation d'une baie ménagée dans la carrosserie d'un véhicule, **caractérisé en ce qu'**il comprend les étapes suivantes :
- fabrication d'un cadre (11) correspondant sensiblement au contour de ladite baie ;
- fabrication d'une glace (14) correspondant sensiblement à la surface de ladite baie ;
- solidarisation de ladite glace (14) audit cadre (11), à l'aide d'éléments de liaison (151, 152) permettant un mouvement de ladite glace perpendiculaire au plan de ladite baie, entre :
- une position d'obturation de ladite baie, dans laquelle ladite glace prend appui contre ledit cadre, de façon à venir sensiblement dans le plan de ladite carrosserie ; et
- une position de libération, dans laquelle ladite glace est décalée vers l'extérieur du véhicule, sur un plan d'ouverture;
lesdits éléments de liaison permettant également un mouvement de coulissement de ladite glace (14), sur une longueur prédéterminée le long dudit plan d'ouverture, ladite glace (14) restant en permanence parallèle au plan de ladite baie ;
- solidarisation dudit cadre (11) à ladite carrosserie (12).

## Claims

1. Closing device for an opening provided in the body (12) of a vehicle, comprising a frame (11) intended to be added to the said body, and a glass (14) that is moveable with respect to the said frame (11), connected to the said frame (11) by connecting elements (151, 152, 24, 25,26 and 27), enabling the said glass (14) to move perpendicularly to the plane of the said aperture, between:
- a closing position of the said opening, in which the said glass (14) rests against the said frame (11), so as to come substantially into the plane of the said body; and
- a free position, in which the said glass (14) is offset towards the outside of the vehicle, on an opening plane, **characterized in that** the said connecting elements (151, 152, 24, 25, 26, 27) also permit a sliding movement of the said glass (14), over a predetermined length along the said opening plane, the said glass (14) remaining permanently parallel to the plane of the said aperture.

2. Closing device according to claim 1, **characterised in that** it comprises sealing means (23) between the said frame (11) and the said glass (14), where the latter is in the closing position.

3. Closing device according to claim 2, **characterised in that** the said sealing means comprise a seal (23) fixed to the said frame.

4. Device according to any one of claims 1 to 3, **characterised in that** the said frame (11) is fixed to the said body with the aid of a fixing and sealing material (22).

5. Closing device according to any one of claims 1 to 4, **characterised in that** each of the said connecting elements (151, 152) cooperates with a guide rail (131, 132) secured to the said frame.

6. Closing device according to any one of claims 1 to 5, **characterised in that** each of the said connecting means (151, 152) comprises at least two hinges (24, 25, 26, 27) so that the said glass is equally offset parallel to the said plane formed by the said aperture, when it is located in the free position.

7. Closing device according to any one of claims 5 to 6, **characterised in that** each of the said connecting elements comprises :
- a first hinge device (24, 26) of which a first end can slide in the said rail (131, 132) and pivot between two extreme positions with respect to the said rail; and
- a second hinge device (25,27), of which a first end is mounted movable in rotation on the second end of the said first hinge device, and of which the second end is attached to the said glass (14).

8. Closing device according to any one of claims 5 to 7, **characterised in that** it comprises an upper hinge element (151, 24, 25) cooperating with an upper guide rail (131) secured to the upper part of the said frame, and a lower hinge element (152, 26, 27) cooperating with a lower guide rail (132) secured to the lower part of the said frame.

9. Closing device according to any one of claims 1 to 8, **characterised in that** it comprises means (28) for locking the said glass in the closed position, acting on at least one of the said connecting elements (26, 27).

10. Method for producing and mounting a closing device for an opening provided in the body of a vehicle, **characterised in that** it comprises the following steps:
- producing a frame (11) corresponding substantially to the outline of the said opening;
- producing glass (14) corresponding substantially to the area of the said opening;
- securing the said glass (14) to the said frame (11), with the aid of connecting elements (151, 152) permitting movement of the said glass perpendicular to the plane of the said opening, between:
- a closing position of the said opening, in which the said glass rests against the said frame, so as to come substantially in the plane of the said body; and
- a free position, in which the said glass is offset towards the outside of the vehicle, over an opening plane;
the said connecting elements also permitting a sliding movement of the said glass (14) over a predetermined length along the said opening plane, the said glass (14) remaining permanently parallel to the plane of the said aperture;
- securing the said frame (11) to the said body (12).

## Patentansprüche

1. Verschlussvorrichtung einer Öffnung in der Karosserie (12) eines Fahrzeugs, die einen Rahmen (11) aufweist, der auf diese Karosserie aufgebracht werden soll, sowie eine gegenüber dem Rahmen (11) bewegliche Glasscheibe (14), die mit dem Rahmen (11) mit Hilfe von Verbindungselementen (151, 152, 24, 25, 26, 27) verbunden ist, welche die Bewegung der Glasscheibe (14) senkrecht zur Ebene der Öffnung zwischen den folgenden Positionen ermöglichen:
- eine Position zum Verschließen der Öffnung, bei der die Glasscheibe (14) an dem Rahmen (11) anliegt, wobei sie in etwa in der Ebene der Karosserie liegt, und
- eine Freigabeposition, wobei die Glasscheibe (14) zum Fahrzeugäußeren hin in einer Öffnungsebene verschoben ist,
**dadurch gekennzeichnet, dass** die Verbindungselemente (151, 152, 24, 25, 26, 27) auch eine Gleitbewegung der Glasscheibe (14) über eine vorgegebene Länge entlang der Öffnungsebene ermöglichen, wobei die Glasscheibe (14) dauernd parallel zur Ebene der Öffnung verbleibt.

2. Verschlussvorrichtung nach Anspruch 1,
**dadurch gekennzeichnet, dass** sie über Mittel zum Abdichten (23) zwischen dem Rahmen (11) und der Glasscheibe (14) verfügt, wenn diese sich in der Verschlussposition befindet.

3. Verschlussvorrichtung nach Anspruch 2,
**dadurch gekennzeichnet, dass** die Mittel zum Abdichten eine an dem Rahmen befestigte Dichtung (23) aufweisen.

4. Vorrichtung nach einem der Ansprüche 1 bis 3,
**dadurch gekennzeichnet, dass** der Rahmen (11) an der Karosserie mit Hilfe eines Befestigungs- und Dichtmaterials (22) befestigt ist.

5. Verschlussvorrichtung nach einem der Ansprüche 1 bis 4,
**dadurch gekennzeichnet, dass** jedes der Verbindungselemente (151, 152) mit einer an dem Rahmen angebrachten Führungsschiene (131, 132) zusammenwirkt.

6. Verschlussvorrichtung nach einem der Ansprüche 1 bis 5,
**dadurch gekennzeichnet, dass** die Verbindungsmittel (151, 152) jeweils mindestens zwei Gelenke (24, 25, 26, 27) umfassen, um sicherzustellen, dass die Glasscheibe ebenfalls parallel zu der von der Öffnung gebildeten Ebene verschoben ist, wenn sie sich in der Freigabeposition befindet.

7. Verschlussvorrichtung nach einem der Ansprüche 5 bis 6,
**dadurch gekennzeichnet, dass** jedes der Verbindungselemente folgendes umfasst:
- ein erstes Gelenkorgan (24, 26), dessen eines Ende in der Schiene (131, 132) gleiten kann und zwischen zwei Extrempositionen im Verhältnis zur besagten Schiene geschwenkt werden kann, und
- ein zweites Gelenkorgan (25, 27), von dem ein erstes Ende drehbar auf dem zweiten Ende des ersten Gelenkorgans angebracht ist und dessen zweites Ende an der Glasscheibe (14) befestigt ist.

8. Verschlussvorrichtung nach einem der Ansprüche 5 bis 7,
**dadurch gekennzeichnet, dass** sie ein oberes Gelenkelement (151, 24, 25) aufweist, das mit einer oberen Führungsschiene (131) zusammenwirkt, welche mit dem oberen Teil des Rahmens verbunden ist, und ein unteres Gelenkelement (152, 26, 27), das mit einer unteren Führungsschiene (132) zusammenwirkt, die mit dem unteren Teil des Rahmens verbunden ist.

9. Verschlussvorrichtung nach einem der Ansprüche 1 bis 8,
**dadurch gekennzeichnet, dass** sie über Verriegelungsmittel (28) der Glasscheibe in der Verschlussposition verfügt, die auf mindestens eines der Verbindungselemente (26, 27) wirken.

10. Fertigungs- und Montageverfahren einer Vorrichtung zum Abdecken einer Öffnung in einer Fahrzeugkarosserie,
**dadurch gekennzeichnet, dass** es die folgenden Schritte umfasst:
- Fertigung eines Rahmens (11), der in etwa dem Umriss der Öffnung entspricht;
- Fertigung einer Glasscheibe (14), die in etwa der Fläche der Öffnung entspricht;
- Verbindung der Glasscheibe (14) mit dem Rahmen (11) mit Hilfe von Verbindungselementen (151, 152), die das Bewegen der Glasscheibe senkrecht zur Ebene der Öffnung zwischen den folgenden Positionen ermöglicht:
- einer Verschlussposition der Öffnung, bei der die Glasscheibe an dem Rahmen anliegt, so dass sie in etwa in der Ebene der Karosserieöffnung liegt, und
- einer Freigabeposition, bei der die Glasscheibe zum Äußeren des Fahrzeugs hin in einer Öffnungsebene verschoben ist,
wobei die Verbindungselemente ebenfalls eine Gleitbewegung der Glasscheibe (14) über eine vorgegebene Länge entlang der Öffnungsebene zulassen, wobei die Glasscheibe (14) dauernd parallel zur Öffnungsebene verbleibt;
- Anbindung des Rahmens (11) an die Karosserie (12).
